## Europäisches Patentamt

## European Patent Office

## Office européen des brevets

(19)

(11) Numéro de publication: **0 043 302**
**B1**

(12)

# FASCICULE DE BREVET EUROPEEN

(45) Date de publication du fascicule du brevet:
**16.10.85**

(51) Int. Cl.⁴: **A 47 C 1/026,** B 60 N 1/06

(21) Numéro de dépôt: **81400946.0**

(22) Date de dépôt: **15.06.81**

(54) **Articulation double permettant le réglage angulaire du dossier d'un siège, en particulier pour siège de véhicule automobile.**

(30) Priorité: **27.06.80 FR 8014325**

(43) Date de publication de la demande:
**06.01.82 Bulletin 82/1**

(45) Mention de la délivrance du brevet:
**16.10.85 Bulletin 85/42**

(84) Etats contractants désignés:
**BE DE GB IT LU NL SE**

(56) Documents cités:
**DE - A - 2 322 207**
**FR - A - 1 422 257**
**FR - A - 1 444 812**
**FR - A - 2 010 441**
**GB - A - 1 565 695**

(73) Titulaire: **A. & M. Cousin et Cie, Le Bois de Flers,
F-61103 Flers Cédex Orne (FR)**

(72) Inventeur: **Cousin, Maurice, 80, Rue Abbé-Lecornu,
Flers 61100 (FR)**
Inventeur: **Pipon, Yves, "La Garenne",
St-Georges-des-Groseillers 61100 (FR)**
Inventeur: **Droulon, Georges, "Le Petit Domaine de la
Garenne, St-Georges-des-Groseillers 61100 (FR)**

(74) Mandataire: **Madeuf, Claude Alexandre Jean et al,
CABINET MADEUF 3, avenue Bugeaud, F-75116 Paris
(FR)**

## Description

La présente invention a pour objet une articulation composée de deux éléments permettant le réglage angulaire du dossier d'un siège, en particulier le dossier d'un siège de véhicules terrestres, nautiques ou aériens.

On connaissait déjà du fait de la demande de brevet allemand publiée avant examen N° 2 322 207 une articulation double permettant le réglage angulaire du dossier d'un siège dans laquelle la ferrure à blocage comporte un flasque fixe solidaire de l'armature de l'assise du siège comportant une zone élargie plate portant un axe d'articulation sur lequel est monté pivotant un flasque mobile solidaire de l'armature du dossier du siège. La zone élargie plate verticale du flasque porte à sa partie inférieure une denture courbe coopérant avec un grain mobile denté à sa partie inférieure et lié au flasque mobile solidaire de l'armature du dossier, le grain étant repoussé dans sa position de serrage sur la denture courbe de la partie fixe par l'intermédiaire d'une came commandée en rotation par l'intermédiaire d'un levier de manœuvre pouvant être soumis à l'action d'un ressort dont l'effet est de repousser le grain de manière à ce que la denture du grain coopère avec la denture courbe de la partie fixe.

Mais cette construction est d'un volume très important et ne répond pas aux besoins actuels car les économies d'énergie, d'une part, et les normes de sécurité, d'autre part, obligent les constructeurs d'articulations de sièges pour véhicules terrestres, nautiques ou aériens à réaliser des ensembles de plus en plus compacts, légers, mais cependant très résistants, de façon à permettre une grande sécurité dans tous les cas; c'est pourquoi la présente invention crée deux ferrures d'articulation, l'une à commande manuelle permettant le blocage de la partie mobile sur la partie fixe tandis que l'autre n'est qu'une charnière permettant de suivre le mouvement mais sans bloquer l'élément mobile par rapport à l'élément fixe.

Conformément à l'invention, l'articulation double permettant le réglage angulaire du dossier d'un siège, en particulier pour véhicule automobile dans laquelle une ferrure à blocage comporte un flasque fixe solidaire de l'armature de l'assise du siège comportant à sa partie supérieure, une zone élargie plate portant un axe d'articulation sur lequel est monté pivotant un flasque mobile solidaire de l'armature du dossier du siège, la zone élargie plate verticale du flasque porte à sa partie inférieure une denture courbe coopérant avec un grain mobile denté à sa partie inférieure et lié au flasque mobile solidaire de l'armature du dossier, une came commandée en rotation par l'intermédiaire d'un levier de manœuvre soumis à l'action d'un ressort de rappel, repousse le grain mobile portant la denture précitée sur la denture courbe de l'évidement de manière à assurer la coopération des deux dentures réalisant ainsi le blocage des deux flasques mobile et fixe l'un par rapport à l'autre, est caractérisée en ce que la zone plate présente un évidement dont la face inférieure courbe porte la denture, un évidement prévu dans le flasque mobile formant avec l'évidement une chambre contenant d'une part la came solidaire d'un arbre lui-même solidaire du levier de manœuvre rappelé par un ressort et d'autre part le grain mobile à denture coopérant avec la denture de l'évidement, les évidements étant formés par semi-découpage respectivement dans le flasque fixe et le flasque mobile, l'axe d'articulation des deux flasques et l'axe de rotation de la came étant distincts. Suivant une autre caractéristique de l'invention, un élément élastique est interposé entre le grain mobile se déplaçant obliquement à partir du fond de l'évidement du flasque mobile de façon à permettre un soulèvement aisé de ce grain, c'est-à-dire le dégagement des dentures mobile et fixe lors de l'effacement de la came par rotation du levier de manœuvre contre l'action du ressort de rappel.

Suivant une autre particularité de l'invention, le grain mobile obliquement qui se déplace suivant un arc de cercle limitant la position la plus en avant et la position la plus en arrière du dossier du siège est percé d'une fenêtre oblongue à travers laquelle passe un axe solidarisant la partie inférieure du flasque fixe, par rapport au flasque mobile, cet axe se déplaçant également dans une fenêtre arquée percée dans la zone élargie plate du flasque fixe.

Diverses autres caractéristiques de l'invention ressortent d'ailleurs de la description détaillée qui suit.

Une forme de réalisation de l'objet de l'invention est représentée, à titre d'exemple, aux dessins annexés.

La fig. 1 est une élévation latérale de la ferrure comportant le dispositif de blocage.

La fig. 2 est une élévation de face, partie en coupe, correspondant à la fig. 1.

La fig. 3 est une élévation latérale à plus grande échelle, partie en coupe, d'une partie de la ferrure à blocage des fig. 1 et 2.

La fig. 3a est une coupe à grande échelle suivant la ligne III–III de la fig. 3.

Les fig. 4 et 5 sont des élévations latérales et des élévations de face, partie en coupe, de la ferrure sans organe de blocage, située sur le côté interne du dossier, c'est-à-dire placée près d'un autre siège de véhicule.

La fig. 6 est une élévation latérale de la ferrure comportant le dispositif de blocage sans le levier de manœuvre, cette figure montrant deux formes de réalisation de commandes indirectes.

La fig. 7 est une élévation de face, partie en coupe, correspondant à la fig. 6.

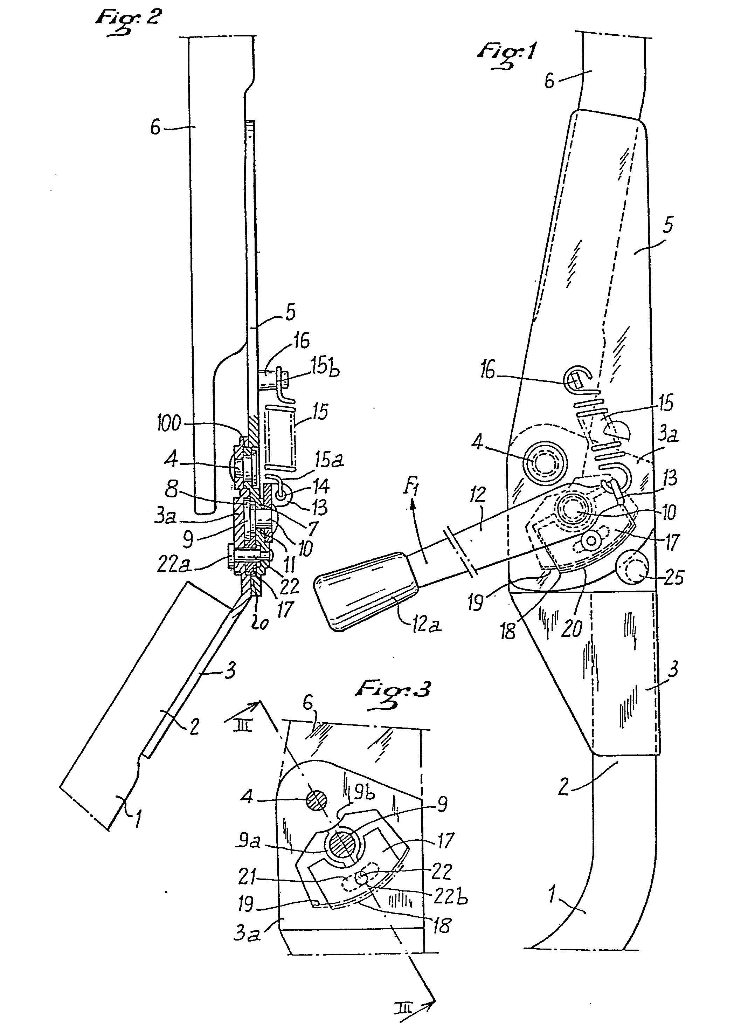

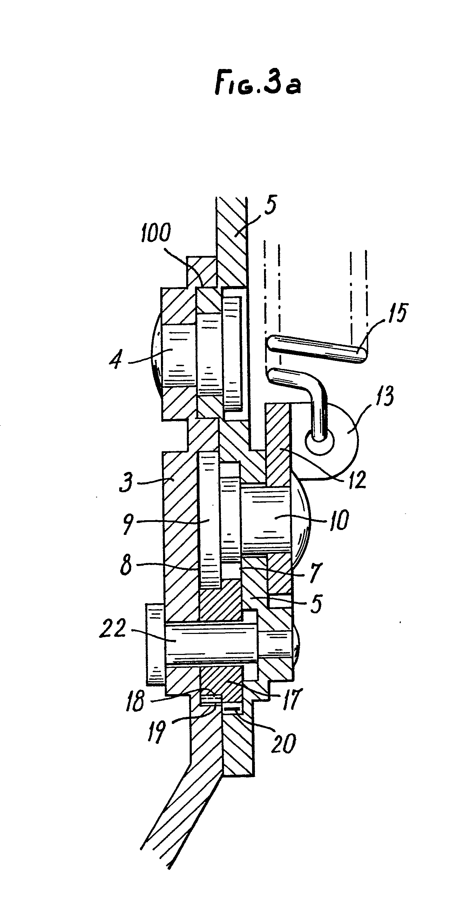

A la fig. 1, on a représenté partiellement l'armature 1 de l'assise d'un siège qui porte, à sa partie supérieure 2, un flasque fixe 3 dont la partie supérieure 3a, qui est plane et verticale, affecte, de face, sensiblement la forme d'un trapèze. La partie supérieure de ce trapèze maintient un axe d'articulation 4. Une semi-découpe 100 permet le pivotement du flasque 5 solidaire de l'armature 6 du dossier du siège. Le flasque 5 affecte sensiblement une forme rectangulaire et est plan. Il comporte, dans sa zone centrale, un évidement 7 correspondant à un évidement opposé 8 du flasque fixe 3 et la chambre ainsi formée contient une came 9 montée sur un arbre 10 placé dans un palier 11 formé par un trou percé dans le flasque mobile 3. L'arbre 10 porte un levier de manœuvre 12 muni d'une manette de préhension 12a à l'une de ses extrémités tandis que son autre extrémité est repliée à angle droit pour former un doigt 13 percé d'un trou 14 dans lequel s'accroche l'extrémité 15a d'un ressort 15 fixé par son extrémité 15b sur un doigt 16 solidaire du côté latéral du flasque mobile 5. Dans la chambre 7, 8 est également placé un grain 17 qui peut coulisser obliquement et qui présente une denture 18 venant en prise avec la denture courbe 19 solidaire du flasque fixe 3. La denture courbe 19 est créée à la partie inférieure de l'évidement 8. Un élément élastique 20 logé sous le grain mobile 17 permet de soulever légèrement ce grain 17 de façon à dégager la denture 18 de la denture 19 lorsque la personne désirant régler le dossier du siège manœuvre, dans le sens de la flèche $F_1$, le levier 11 contre l'action du ressort 15. Dans le cas présent, la came 9 (voir fig. 3), qui du fait de sa forme applique fortement la denture 18 du grain 17 sur la denture courbe 19 sous l'action du ressort 15 en tournant, ne repousse plus le grain 17 et l'élément élastique 20 soulève ce grain 17 en désaccouplant ainsi les dentures 18 et 19. L'élément élastique 20 qui soulève le grain (17) est logé à la partie inférieure de ce grain dans l'évidement 7 du flasque mobile 5 (voir fig. 1, 2 et 3a).

Comme cela est visible aux dessins, le flasque fixe 3 comporte une ouverture en arc de cercle 21 dans laquelle peut passer un petit axe 22 solidaire du flasque mobile 5 (voir fig. 2). L'axe 22 porte, côté du flasque fixe 3, une tête 22a. Cet axe 22 maintient la position latérale des flasques fixe et mobile dans la zone de crantage du grain 17. Ceci permet d'éviter l'écartement des flasques lors des efforts et de maintenir ainsi toutes les surfaces de contact entre le grain et les parties fixe et mobile.

La fixation et le guidage du flasque mobile 5, par rapport au flasque fixe 3, sont complétés par un pion 25 de type connu.

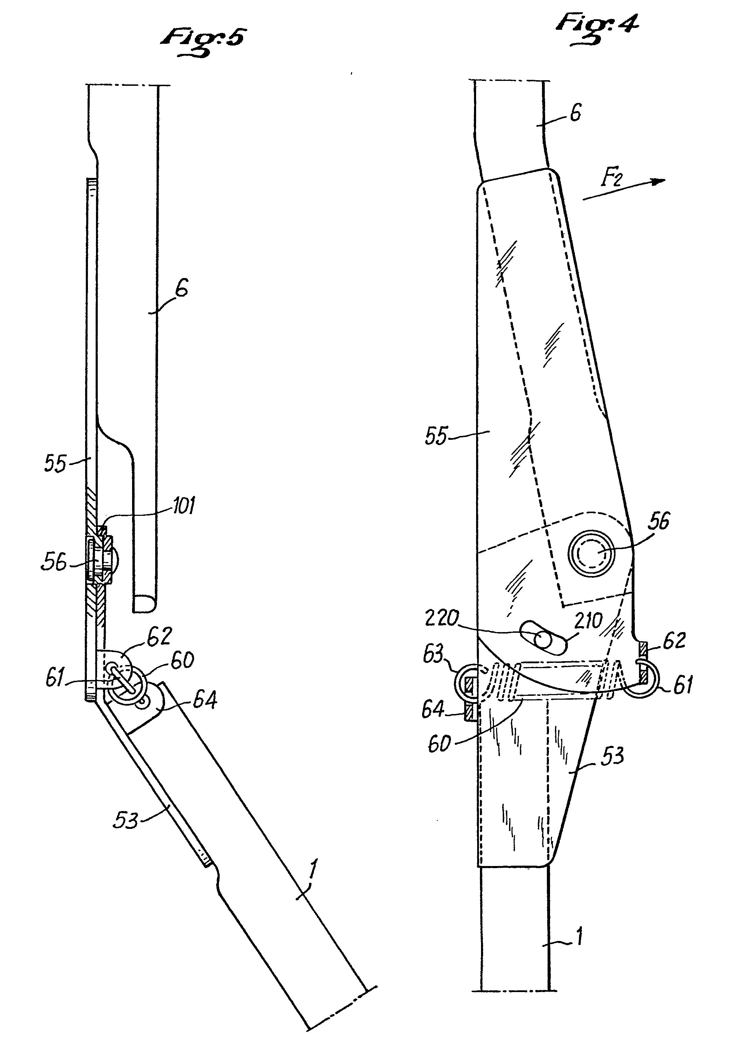

Comme on a pu s'en rendre compte, il suffit de débloquer le grain 17 par l'intermédiaire de la came 9, dont le profil 9a est d'un diamètre inférieur au profil 9b, pour permettre la rotation du dossier par rapport à l'assise attendu que ce dossier tend à se rabattre sur le dos de l'utilisateur (voir fig. 4 et 5) puisque le flasque mobile 55 de la ferrure non bloquée qui est articulé sur un axe 56 semi-découpé, retenu par une conformation 101 solidaire du flasque fixe 53 est rappelé, dans le sens de la flèche $F_2$ (voir fig. 4), par un ressort 60 dont l'extrémité 61 est solidaire du flasque 55 par l'intermédiaire d'une patte 62 tandis que l'extrémité 63 de ce même ressort 60 est solidaire d'une patte 64 fixée sur le flasque fixe 53. De même, un ajour découpé 210 semi-courbe réalisé dans la partie mobile permet de limiter le débattement du dossier, ceci obtenu par la demi-découpe 220 réalisée dans la partie fixe 53. Dans certains cas, il est prévu à la place du dispositif d'articulation simple, montré aux fig. 4 et 5, une articulation identique à celle des fig. 1 et 2 mais dont la commande du grain 17 est obtenue par une barre de liaison 300 soudée directement sur la came 9. Il est donc prévu un passage 301 constitué par un trou dans le flasque fixe 3.

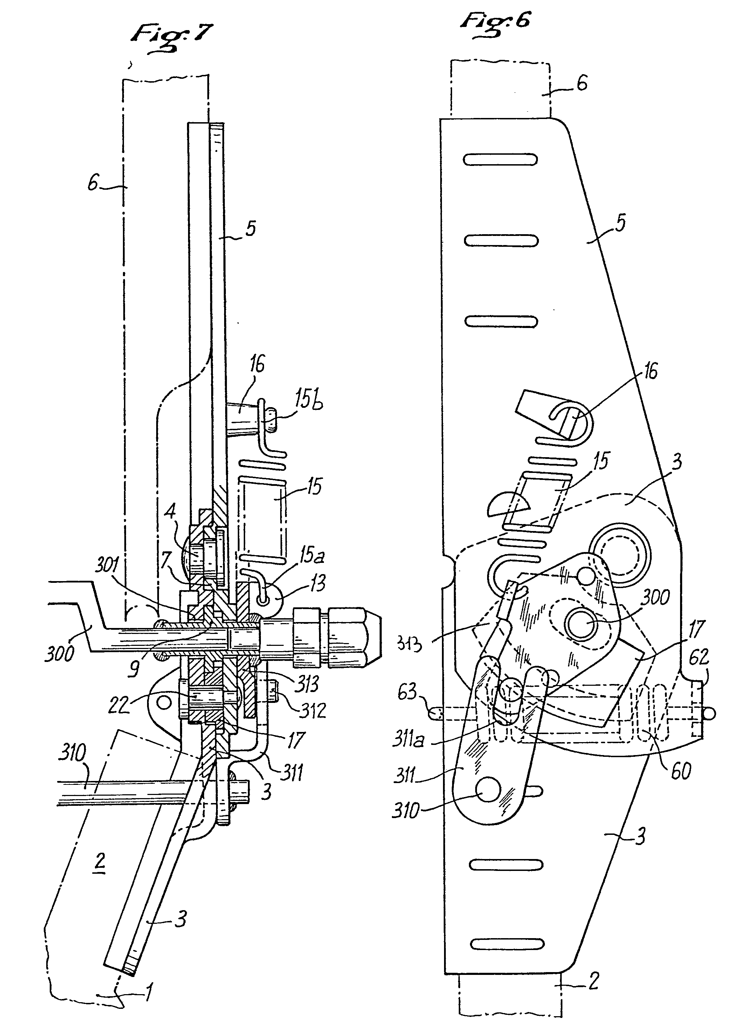

Dans d'autres cas également, on peut commander le mouvement du grain 17 par l'attaque de la came 9 au moyen d'une barre 310 fixée sur une pièce 311 qui, en déplaçant en ergot 312, provoque la rotation d'une pièce 313 solidaire de la came 9. Dans ce cas, la pièce 311 comporte une ouverture allongée 311a comme représenté à la fig. 6.

## Revendications

1. Articulation double permettant le réglage angulaire du dossier d'un siège, en particulier pour véhicule automobile dans laquelle une ferrure à blocage comporte un flasque fixe (3) solidaire de l'armature (2) de l'assise du siège comportant à sa partie supérieure, une zone élargie plate portant un axe d'articulation (4) sur lequel est monté pivotant un flasque mobile (5) solidaire de l'armature (6) du dossier du siège la zone élargie plate verticale du flasque porte à sa partie inférieure une denture courbe coopérant avec un grain mobile (17) denté à sa partie inférieure et lié, au flasque mobile solidaire de l'armature du dossier, une came (9) commandée en rotation par l'intermédiaire d'un levier (12) de manœuvre somis à l'action d'un ressort de rappel (15), repousse le grain mobile (17) portant la denture (18) précitée sur la denture courbe (19) de l'évidement de manière à assurer la coopération des deux dentures (18) et (19) réalisant ainsi le blocage du flasque mobile (5) par rapport au flasque fixe (3), caractérisée en ce que la zone plate présente un évidement (8) dont la face inférieure courbe porte la denture (19), un évidement (7) prévu dans le flasque mobile (5) formant avec l'évidement (8) une chambre contenant d'une part la came (9) solidaire d'un arbre (10) lui-même solidaire du levier de manœuvre (12) rappelé par un ressort (15) et d'autre part le grain mobile (17) à denture (18) coopérant avec la denture (19) de l'évidement, les évidements (7, 8) étant formés par semi-découpage respectivement dans le flasque fixe (3) et le flasque mobile (5), l'axe d'articulation (4) et l'axe de rotation de la came étant distincts.

2. Articulation double suivant la revendication 1, caractérisée en ce qu'un élément élastique (20) est interposé entre le grain mobile (17) se déplaçant obliquement et le fond de l'évidement (7) du flasque mobile (5) de façon à permettre un soulèvement aisé de ce grain, c'est-à-dire le dégagement des dentures mobile et fixe lors de l'effacement de la came (9) par rotation du levier de manœuvre (12) contre l'action du ressort de rappel (15).

3. Articulation double suivant l'une des revendications 1 et 2, caractérisée en ce que le grain mobile obliquement se déplace suivant un arc de cercle limitant la position la plus en avant et la position la plus en arrière du dossier du siège et est percé d'une fenêtre oblongue à travers laquelle passe un axe (22) solidarisant la partie inférieure du flasque fixe (3) par rapport au flasque mobile (5), cet axe se déplaçant également dans une fenêtre arquée (21) percée dans la zone élargie plate du flasque fixe.

**Claims**

1. Double articulation enabling the angular adjustment of a seat back, particularly for motor vehicle wherein an iron fitting with a locking arrangement comprises a fixed flange (3) rigidly connected to the armature (2) of the seat frame comprising at its upper portion, a flat widened region carrying an articulation axis (4) on which is pivotally mounted a mobile flange (5) rigidly connected to the armature (6) of the seat back, the vertical flat widened region of the flange carries at its lower part a curved toothing cooperating with a mobile cam-roller (17) toothed at its lower portion and secured to the mobile flange rigidly connected to the armature of the seat back, a cam (9) controlled in rotation through a control lever (12) subjected to action of a return spring (15), pushes back the mobile cam-roller (17) carrying the aforementioned toothing (18) onto the curved toothing (19) of the recess in order to ensure the cooperation of the two toothings (18) and (19) for realizing thus the locking of the mobile flange (5) with respect to the fixed flange (3), characterized in that the flat area has a recess (8) the arcuate lower surface of which carries the toothing (19), a recess (7) provided in the mobile flange (5) forming with the recess (8) a chamber containing on the one hand the cam (9) rigidly connected to a shaft (10) itself rigidly connected to the handling lever (12) returned by a spring (15) and on the other hand the mobile cam-roller (17) with toothing (18) cooperating with the toothing (19) of the recess, the recesses (7, 8) being formed by semicutting respectively in the fixed flange (3) and mobile flange (5), the articulation axis (4) and the rotation axis of the cam being separated.

2. Double articulation according to claim 1, characterized in that a resilient element (20) is interposed between the mobile cam-roller (17) which is oblically movable and the bottom of the recess (7) of the mobile flange (5) in order to permit an easy lifting of this cam-roller, i.e. the disengagement of the mobile and fixed toothings upon the retraction of the cam (9) by rotation of the control lever (12) against action of the return spring (15).

3. Double articulation according to one of claims 1 and 2, characterized in that the oblically movable cam-roller moves according to an arc of circle limiting the foremost position and the rearmost position of the seat back and is pierced with an oblong window through which passes a pin (22) rigidly connecting the lower portion of the fixed flange (3) relative to the mobile flange (5), this pin moving also inside a curved window (21) pierced in the flat widened area of the fixed flange.

**Patentansprüche**

1. Doppelter Gelenkbeschlag für Sitze mit verstellbarer Rückenlehne, insbesondere für Kraftfahrzeuge, bei dem ein Blockierungsbeschlag einen ortsfesten Flansch (3) aufweist, der mit der Sitzarmatur (2) fest gebunden ist, die in ihrem oberen Teil einen flachen, erweiterten Bereich aufweist, der eine Gelenkachse (4) trägt, auf welcher ein beweglicher Flansch (5) drehbar gelagert ist, der mit der Armatur (6) der Sitz-Rückenlehne fest verbunden ist, wobei der senkrechte, flach erweiterte Bereich des Flansches in seinem unteren Teil eine bogenförmige Verzahnung aufweist, die mit einem beweglichen Nocken (17) zusammenwirkt, der in seinem unteren Teil verzahnt und mit dem beweglichen, mit der Rückenlehnenarmatur fest gebundenen Flansch verbunden ist, wobei eine Nocke (9), deren Drehbewegung über einen durch eine Rückstellfeder (15) beeinflussten Betätigungshebel (12) gesteuert wird, den beweglichen, mit der oben erwähnten Verzahnung (18) versehenen Nocken (17) auf die bogenförmige Verzahnung (19) der Ausnehmung schiebt, so dass beide Verzahnungen (18) und (19) zusammenwirken und infolgedessen der bewegliche Flansch (5) dem ortsfesten Flansch (3) gegenüber blockiert wird, dadurch gekennzeichnet, dass der flache Bereich eine Ausnehmung (8) aufweist, deren untere, bogenförmige Seite mit der Verzahnung (19) versehen ist, wobei eine im beweglichen Flansch (5) ausgesparte Ausnehmung zusammen mit der Ausnehmung (8) einen Raum bilden, der einerseits die Nocke (9), die mit einer mit dem durch eine Feder (15) beeinflussten Betätigungshebel festgebundenen Welle (10) festgebunden ist, und andererseits den beweglichen mit der Verzahnung (18) versehenen und mit der Verzahnung (19) der Ausnehmung zusammenwirkenden Nocken (17) enthält und wobei die Ausnehmungen (7, 8) im ortsfesten Flansch (3) sowie im beweglichen Flansch (5) ausgeschnitten werden und die Gelenkachse (4) und die Drehachse der Nocke getrennt sind.

2. Doppelter Gelenkbeschlag nach Anspruch 1, dadurch gekennzeichnet, dass ein elastisches Element (20) zwischen den beweglichen Nocken (17), der sich schräg bewegt, und den Boden der Ausnehmung (7) des beweglichen Flansches (5) eingeschaltet ist, was ein leichtes Aufheben des Nockens ermöglicht, so dass die bewegliche Verzahnung und die ortsfeste Verzahnung bei der durch die Drehung des Betätigungshebels (12) entgegen der Wirkung der Rückstellfeder (15) verursachten Zurückstellung der Nocke freigelegt werden.

3. Doppelter Gelenkbeschlag nach einem der Ansprüche 1 oder 2, dadurch gekennzeichnet, dass sich der schräg bewegliche Nocken längs eines Kreisbogens bewegt, der die vorderen und die hinteren Endstellungen der Rückenlehne bestimmt und eine längliche Ausnehmung aufweist, durch die eine Achse (22) geht, die den unteren Teil des beweglichen Flansches (3) mit dem beweglichen Flansch (5) fest verbindet, wobei diese Achse sich auch in einer bogenförmigen Ausnehmung (21) bewegt, die sich im flachen erweiterten Bereich des ortsfesten Flansches befindet.

Fig. 2

Fig. 1

Fig. 3

# FIG.3a

Fig:5

Fig:4

Fig.7

Fig.6